# EUROPÄISCHE PATENTANMELDUNG

(11) **EP 2 275 724 A2**
(43) Veröffentlichungstag der Anmeldung: **19.01.2011**
(21) Anmeldenummer: 10167702.9
(22) Anmeldetag: 29.06.2010
(51) Int. Cl.: F16K 1/22, F02D 9/10

(54) **Klappenventil für eine Verbrennungskraftmaschine**

(30) Priorität: 15.07.2009 DE 102009033411
(71) Anmelder: Pierburg GmbH, 41460 Neuss (DE)
(72) Erfinder: Röhl, Reinhard, 40474 Düsseldorf (DE)
(74) Vertreter: Patentanwälte ter Smitten

(57) **Zusammenfassung**

Klappenventil (1) für eine Verbrennungskraftmaschine mit einem Klappenstutzen (2), in dem eine Klappenwelle (3) gelagert ist, auf welcher eine Klappe (4) symmetrisch schräg verlaufend derart angeordnet ist, dass die Klappe (4) in geschlossenem Zustand des Klappenventils (1) an der Innenseite des Klappenstutzens (2) anschlägt, wobei die Klappe (4) und der Strömungsquerschnitt des Klappenstutzens (2) elliptisch ausgeführt sind, wobei die Hauptachse (HK) und die Nebenachse (NK) der elliptischen Klappe größer als die jeweilige Hauptachse (HS) und Nebenachse (NS) des elliptischen Strömungsquerschnittes des Klappenstutzens sind und die Nebenachse (NK) der Klappe (4) kleiner als die Hauptachse (HS) des Strömungsquerschnitts des Klappenstutzens (2) ist.

## Beschreibung

Die Erfindung betrifft ein Klappenventil für eine Verbrennungskraftmaschine mit einem Klappenstutzen, in dem eine Klappenwelle gelagert ist, auf welcher eine Klappe symmetrisch schräg verlaufend derart angeordnet ist, dass die Klappe in geschlossenem Zustand des Klappenventils an der Innenseite des Klappenstutzens anschlägt.

Ein derartiges Klappenventil ist beispielsweise aus der DE 103 59 609 A1 bekannt. Diese Druckschrift offenbart ein Klappenventil, bei dem die Klappe symmetrisch schräg verlaufend auf der Klappenwelle angeordnet ist. Auf diese Weise kann eine umlaufende Anlage der Klappe gewährleistet werden, da die Lagerstellen einer derartigen Klappenwelle nicht mehr im Bereich der Klappe liegen. Das Problem einer Leckage über die Lagerstellen der Klappenwelle soll damit behoben sein. Um jedoch im geschlossenen Zustand ein dichtes Anliegen der Drosselklappe an die Innenwand des Klappenstutzens zu gewährleisten, besitzt die Klappe eine umlaufende Dichtung. Ein derartig ausgeführtes Klappenventil ist relativ teuer in der Herstellung, da die Dichtung entweder als zusätzliches Bauteil beschafft und montiert werden muss, oder beispielsweise mittels Montagespritzen anzuformen ist.

Der Erfindung liegt daher die Aufgabe zu Grunde, ein Klappenventil zu verschaffen, dass den o. g. Nachteil vermeidet.

Diese Aufgabe wird durch die Erfindung dadurch gelöst, die Klappe und der Strömungsquerschnitt des Klappenstutzens elliptisch ausgeführt sind, wobei die Hauptachse und die Nebenachse der elliptischen Klappe größer als die jeweilige Hauptachse und Nebenachse des elliptischen Strömungsquerschnittes des Klappenstutzens sind und die Nebenachse der Klappe kleiner als die Hauptachse des Strömungsquerschnitts des Klappenstutzens ist.

In einer besonders vorteilhaften Ausführungsform verläuft die Hauptachse der elliptisch ausgebildeten Klappe in voll geöffnetem Zustand im Wesentlichen parallel zur Strömungsrichtung im Klappenstutzen.

Vorzugsweise schließt die Wellenachse mit der Klappenebene einen Winkel α von 30 - 70 Grad ein, wobei die Projektion der Wellenachse in die Klappenebene zwischen der Hauptachse und der Nebenachse liegt. Weiterhin ist es vorteilhaft, wenn die Umfangsfläche der Klappe derart angeschrägt ist, dass bei Anschlag der Klappe diese Umfangsfläche an der Innenseite des Klappenstutzens anliegt.

Des Weiteren ist es denkbar, dass die Klappenwelle lediglich einseitig / einfach gelagert ist.

Im Folgenden wird unter Bezugnahme auf die Zeichnung ein Ausführungsbeispiel der Erfindung näher erläutert, hierin zeigt:
Figur 1 eine perspektivische Ansicht des erfindungsgemäßen Klappenventils in voll geschlossenem Zustand,
Figur 2 eine Draufsicht des Klappenstutzens mit Klappenwelle und Klappe in voll geöffnetem Zustand, und
Figur 3 eine Schnittansicht des Klappenstutzens mit Klappenwelle und Klappe in voll geöffnetem Zustand.

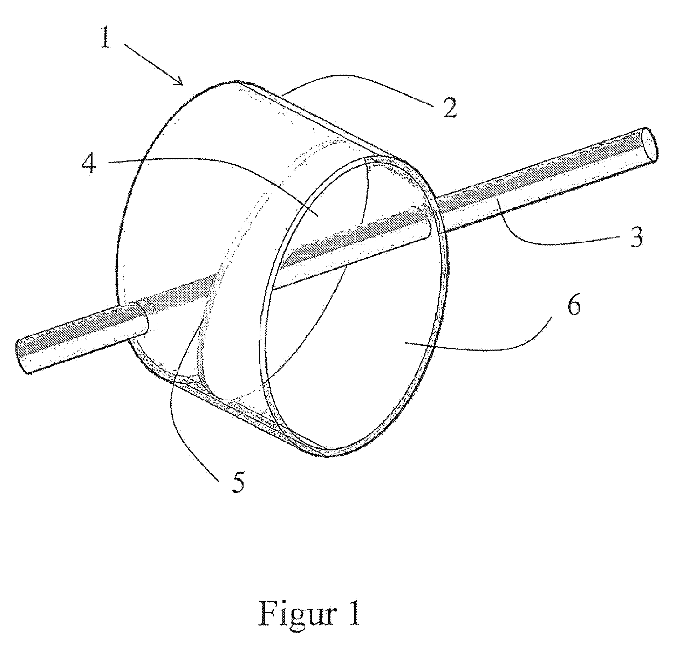

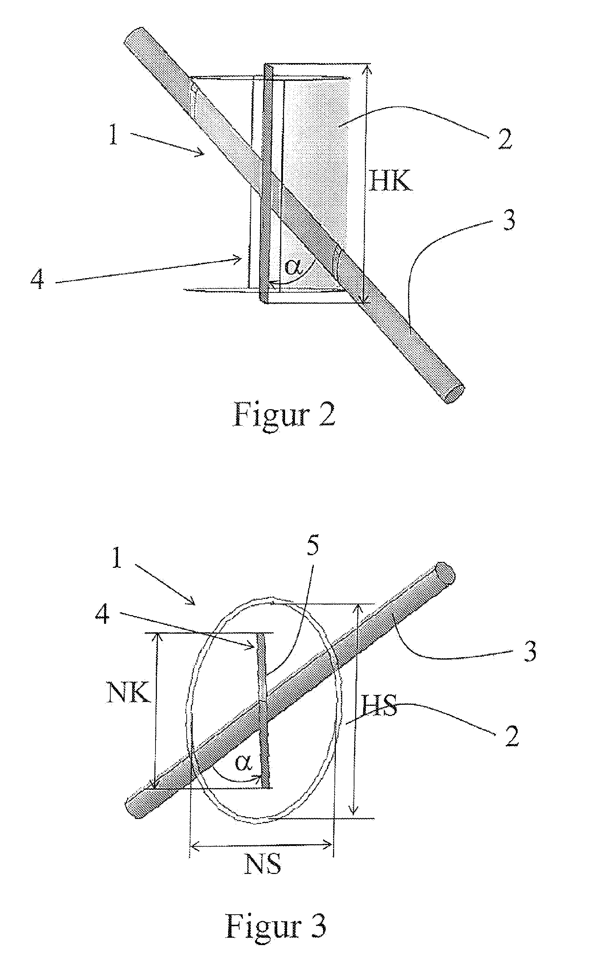

Figur 1 zeigt ein erfindungsgemäßes Klappenventil 1. Dieses Klappenventil 1 weist einen Klappenstutzen 2 mit einem elliptische Strömungsquerschnitt auf, in dem auf bekannte Weise eine Klappenwelle 3 gelagert ist. Auf dieser Klappenwelle ist eine Klappe 4 symmetrisch schräg verlaufend angeordnet. Die Klappe 4 ist ebenfalls elliptisch ausgeführt. Im dargestellten Zustand liegt die Klappe 4 mit einer angeschrägten Umfangsfläche 5 an einer Innenseite 6 des Klappenstutzens 2 an. Figur 2 zeigt nun eine Draufsicht des Klappenstutzens 2 mit der Klappenwelle 3 und der Klappe 4 in voll geöffnetem Zustand, wobei die Hauptachse HK der Klappe 4 zu erkennen ist.

Figur 3 zeigt eine Schnittansicht des Klappenstutzens 2 mit der Klappenwelle 3 und der Klappe 4 in voll geöffnetem Zustand, wobei die Hauptachse HS und die Nebenachse NS des Strömungsquerschnitts des Klappenstutzens 2 sowie die Nebenachse NK der Klappe 4 dargestellt ist. Dadurch, dass die Hauptachse (HK) und die Nebenachse (NK) der elliptische Klappe größer als die jeweilige Hauptachse (HS) und Nebenachse (NS) des elliptischen Strömungsquerschnittes des Klappenstutzens sind und die Nebenachse (NK) der Klappe (4) kleiner als die Hauptachse (HS) des Strömungsquerschnitts des Klappenstutzens (2) ist, ist ein einfaches Verschwenken der Klappe 4 von dem geschlossenen Zustand in die geöffnete Stellung möglich.

Um nun gemäß Figur 4 in eine vollständig geöffnete Stellung verschwenkt werden zu können, schwenkt die Klappe 4 in die Klappenfreigangsflächen 6 hinein. Die Hauptachse der elliptisch ausgebildeten Klappe 4 verläuft nun parallel zur Strömungsrichtung im Klappenstutzen 2.

Im vorliegenden Ausführungsbeispiel durchstößt die Klappenwelle 3 den Klappenstutzen 2. Dabei schließt die Klappenwelle 3 mit der Klappenebene einen Winkel α von 50 Grad ein. Die Projektion der Wellenachse 3 in die Klappenebene liegt zwischen der Hauptachse (HK) und der Nebenachse (NK). Es ist jedoch natürlich auch möglich die Klappe 4 über einen Wellenstutzen lediglich einseitig im Klappenstutzen 2 zu lagern.

## Patentansprüche

1. Klappenventil (1) für eine Verbrennungskraftmaschine mit einem Klappenstutzen (2), in dem eine Klappenwelle (3) gelagert ist, auf welcher eine Klappe (4) symmetrisch schräg verlaufend derart angeordnet ist, dass die Klappe (4) in geschlossenem Zustand des Klappenventils (1) an der Innenseite des Klappenstutzens (2) anschlägt,
**dadurch gekennzeichnet, dass** die Klappe (4) und der Strömungsquerschnitt des Klappenstutzens (2) elliptisch ausgeführt sind, wobei die Hauptachse (HK) und die Nebenachse (NK) der elliptischen Klappe größer als die jeweilige Hauptachse (HS) und Nebenachse (NS) des elliptischen Strömungsquerschnittes des Klappenstutzens sind und die Nebenachse (NK) der Klappe (4) kleiner als die Hauptachse (HS) des Strömungsquerschnitts des Klappenstutzens (2) ist.

2. Klappenventil nach Anspruch 1, **dadurch gekennzeichnet, dass** die Hauptachse der elliptisch ausgebildeten Klappe (4) in voll geöffnetem Zustand im Wesentlichen parallel zur Strömungsrichtung im Klappenstutzen (2) verläuft.

3. Klappenventil nach einem der vorhergehenden Ansprüche, **dadurch gekennzeichnet, dass** die Wellenachse mit der Klappenebene einen Winkel α von 30 - 70 Grad einschließt, wobei die Projektion der Wellenachse in die Klappenebene zwischen der Hauptachse (HK) und der Nebenachse (NK) liegt.

4. Klappenventil nach einem der vorhergehenden Ansprüche, **dadurch gekennzeichnet, dass** die Umfangsfläche (5) der Klappe (4) derart angeschrägt ist, dass bei Anschlag der Klappe (4) diese Umfangsfläche (5) an der Innenseite des Klappenstutzens (3) anliegt.

5. Klappenventil nach einem der vorhergehenden Ansprüche, **dadurch gekennzeichnet, dass** die Klappenwelle (3) einseitig gelagert ist.
